# EUROPEAN PATENT SPECIFICATION

(11) **EP 4 126 292 B1**
(45) Date of publication and mention of the grant of the patent: **20.08.2025**
(21) Application number: 21782142.0
(22) Date of filing: 19.03.2021
(51) Int. Cl.: B01D 35/30, B01D 29/21

(54) **FILTER AND FILTER BASE RETENTION SYSTEM**
FILTER UND FILTERBASISHALTESYSTEM
FILTRE ET SYSTÈME DE RÉTENTION DE BASE DE FILTRE

(30) Priority: 03.04.2020 US 202063004518 P; 17.08.2020 US 202063066574 P
(43) Date of publication of application: 08.02.2023
(60) Divisional application: 25179996.1
(73) Proprietor: Baldwin Filters, Inc., Cleveland, OH 44124 (US)
(72) Inventor: CALCATERRA, Farrell F., Kearney, Nebraska 68847 (US); WICK, Charles R., Pleasanton, Nebraska 68866 (US); RITCHIE, Simon D., Kearney, Nebraska 68845 (US)
(74) Representative: Murgitroyd & Company
(86) International application number: PCT/US2021/023087
(87) International publication number: WO 2021/202122

(56) References cited:
- WO-A1-2006/012031
- US-A- 5 766 463
- US-A1- 2004 217 045
- US-A1- 2017 274 303
- US-A1- 2019 217 229
- US-A1- 2020 086 241
- US-B2- 7 850 755
- US-B2- 7 871 517
- US-B2- 9 120 041

## Description

### FIELD OF THE INVENTION

The present invention generally relates to fluid filters, and more particularly to filters and/or fluid filter interfaces and connections of such filters to filter heads, that may have particular application in higher pressure liquid filtration applications such as lube and hydraulic filters.

### BACKGROUND OF THE INVENTION

Installation and removal of filters often require them to be threaded onto a stud in a base or casting. Many filters such as canister type filters have a permanent housing and are entirely disposable at filter change intervals. If the filter is partly reusable, a lid is typically threaded to a housing enclosing a filter element, which can be removed and replaced. Threading a filter to a base or lid to a housing typically requires tools and time to service, which can keep a piece of equipment out of operation.

A variety of filter retention systems are known generally such as reflected in U.S. Patent 5,203,994 to Janik entitled Fuel Filter Retention system; US Publication No. 2010/0155321 to Sasur entitled Filter Assembly; U.S. Publication No. 2017/0128864 to Pribanic entitled "Fuel Filter Assembly and Cartridge"; US Patent No. 6,881,334 to Janik entitled "Eccentric interference retention system for a filter cartridge"; U.S. Patent No. 9,023,202 to Beard entitled "Filter element and filter assembly including locking mechanism"; U.S. Patent No. 7,850,755 to Krull entitled "Filter with improved fatigue performance and torque transfer"; U.S. Patent No. 9,358,485 to Krull entitled "Hydraulic spin-on filter cartridge having base plate supporting radially directed seal"; U.S. Publication No. 2010/0044293 to Fisher, entitled "Sealing for liquid filter"; U.S. Patent No. 5,490,930 to Krull entitled "Filter"; and U.S. Publication No. 2007/0193929 to Brown entitled "Housing for environmentally friendly filter cartridge".

To improve installation and removal, designs have been developed that utilize collars, such as shown in U.S. Patent 5,203,994 to Janik to keep the filter attached to the base; or twist lock designs such as shown in US Patent No. 6,881,334 to Janik or U.S.

Patent No. 9,023,202 to Beard. These designs are limited in pressure capability and traditionally used for lower pressure fuel applications.

In addition, collars used to attach filters to a base can become lost if the collar is not permanently attached to the base. This can become problematic when servicing in the field if another collar is not available. Equipment downtime can result.

Higher pressure applications such as hydraulic filters can experience high normal operating pressures well in excess of 100 PSI and in some instances in excess of 1,000 PSI as described US 2010/0044293 to Fisher, entitled "Sealing for liquid filter". As shown therein and in U.S. Patent Nos. 9,023,202 to Beard; 7,850,755 to Krull; 9,358,485 to Krull also disclose such hydraulic filters use spin-on connections between a hydraulic filter and base that utilizes a threaded stud to attach the filter to the base.

Similar threaded stud mounting configuration exists for traditional spin-on lube filters, as shown in U.S. Patent No. 5,490,930 to Krull entitled "Filter". Also, U.S. Publication No. 2007/0193929 to Brown is an example of a cartridge filter that fits inside a housing with a screw-on lid.

The following documents may also provide technical background to the present disclosure: US2020/086241 A; US2019/217229 A; US7871517 B; and US9120041 B.

### BRIEF SUMMARY OF THE INVENTION

In accordance with an inventive aspect, a filter is provided with several radial projections of a baseplate, which provide a non-threaded connection.

At least one radial projection projects radially from the mouth between the filter housing and a distal end of the mouth. In particular, the present invention provides a filter as defined in appended claim 1. Optional features are defined in the appended dependent claims.

Several features and additional structures may be employed with a filter either alone and/or in combination as in the below different paragraphs.

The filter may further comprise a ring seal supported within a first annular channel defined by the mouth toward a distal end of the mouth.

Preferably the baseplate and the filter housing are separate component parts, the baseplate including the annular mouth and the at least one radial projection are at least one of a machined structure and a casting from at least one of steel or aluminum, and wherein the filter is a liquid filter.

The at least one projection serves as a mounting base retainer providing a strength property such that the mounting base retainer can provide an axial retaining force when the filter is subjected to a pressure greater than 100 PSI.

For example, at least 3 of the radial projections and at least 3 of the radial gaps can be provided, with the radial projections and the radial gaps being matched of substantially similar geometric size and configuration.

The annular mouth may be stepped to include a thicker diameter region from which the one or more radial projections extend and a thinner diameter region along distal tip region above the one or more radial projections.

The baseplate may also provide an annular receiving groove region is arranged below the at least one projection and axially between the at least one projection and the filter housing that is sized and configured for receiving mounting protrusions from a filter head.

The baseplate can further comprise a step in outer diameter from a terminating cylindrical portion extending axially away from the at least one radial projection to a terminating end, and an intermediate cylindrical portion supporting the at least one radial projection.

The filter element may comprise a tubular ring of the filter media, an open end cap and a closed end cap. The open end cap is bonded to the tubular ring of the filter media proximate the open end and the closed end cap is bonded to the tubular ring of the filter media proximate the closed end.

In such a filter element, a spring can engage between the closed end and the closed end cap urging the filter element against the baseplate.

For example to receive the filter element, the baseplate can further comprise an annular hub including a tubular extension, with the annular hub connected to the annular mouth by a plurality of ribs to define the inlet port. The outlet port can be defined within the tubular extension which provides an annular divider between the inlet portion and the outlet port. Preferably, the tubular extension having groove carrying a ring seal for sealing purposes.

For the filter element, open end cap may also comprise an annular disc portion and a tubular extension projecting therefrom to provide the outlet port therein and serve an annular divider to define the inlet port between the open end cap and the baseplate.

In an example, the filter housing comprises a cylindrical metal canister having a terminating lip edge bent over the baseplate directly connected the filter housing and the baseplate.

In such example, the baseplate can further include an outermost annular wall and an annular ledge, with the outermost annular wall depending and axially extending from the ledge, with the ledge extending radially inward from the outermost annular wall to the annular mouth, and with the terminating lip edge engaging over the annular ledge. Preferably, a ring gasket seals between the baseplate and the outermost annular wall.

When a baseplate is directly connected to the housing (but not in a unitary manner), an annular bead provides a neck (and/or another form of neck is provided for example by a stepped canister), which is formed into the cylindrical metal canister and engages a terminating end of the outermost annular wall to sandwich and permanently secure the baseplate between the terminating lip edge and annular bead or neck.

Preferably, the filter housing is permanently mounted to the baseplate, and the filter element is one of removable and permanently installed in the filter housing.

The filter element can further comprise an open end cap and a closed end cap, wither the open end cap bonded to the filter media proximate the open end and the closed end cap bonded to the filter media proximate the closed end, with the baseplate being non-unitary as a separate structure from the open end cap.

Another aspect is directed toward a filter and base assembly that includes such a filter. The assembly also comprises a filter base including a unfiltered fluid outlet, and a filtered fluid inlet with the filter removably connected to the filter base. A collar retains the filter to the filter base, with the collar including a plurality of protrusions interlocking with the filter and axially engaging against the at least one radial projection to retain the filter to the filter base.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a side view of a filter and base assembly in accordance with an embodiment of the present invention.
FIG. 2 is a cross section along a plane through a central axis of the filter and base assembly of FIG. 1.
FIG. 3 is an exploded assembly view of the parts of a filter base with collar thereon and baseplate of the assembly of FIG. 1 to show how the mounting interface of the baseplate installs onto the filter base and interacts with the collar.
FIGS. 4 and 5 are cross-section of select parts of the embodiment of FIG 1, namely the filter base and collar (the filter base alone and/or collectively with the collar sometimes referred to as filter head) along with the mounting interface portion of the filter, shown in the unlocked and locked states respectively, which the collar rotated to release the filter in FIG. 4 and rotated to a position to retain the filter as shown in FIG. 5.
FIG. 6 is a perspective view of a baseplate of the filter according to the embodiment of FIG. 1.
FIG. 7 is a perspective view of the collar alone that is used in filter and base assembly of FIG. 1.
FIG. 8 is a perspective exploded assembly view of the assembly of the collar of FIG. 7 (but not yet assembled) onto the filter base to provide a filter head.
FIG. 8A is a perspective view of the filter base alone shown in FIG. 8 to show retaining flange structures that can ride within a groove and engage a stepped flange of the collar (collar being shown in FIGS. 7 and 8, with collar groove 500 best shown in FIG. 7).
FIG. 9 is a perspective cross section of the filter used in the filter and base assembly of FIG. 1.
FIG. 10 is a perspective view of an internal filter element employed in the filter of FIG. 9.
FIG. 11 is a perspective view an alternative one piece metal casting and/or machined metal baseplate to provide the mounting interface for the filter according to an alternative embodiment of the present invention.
FIG. 12 is a cross-section of a filter and base assembly similar to FIG. 2 but instead incorporating the baseplate of FIG. 11 according to the alternative embodiment thereof, it being understood that the description and components for the first or earlier embodiments being applicable other than the changes due to the one piece casting baseplate of FIG. 11.
FIG. 13 is an isometric view of a spring plunger that can be used in the above first or second embodiments as a part of a detent mechanism for better ensuring or retaining at least the locked state.
FIG. 14 are a perspective illustration of a region of the outer cylindrical periphery of the filter base that includes detents which may interact with such as spring plunger.
FIG. 15 is a cross section of the filter base and assembly of FIG. 12, but taken perpendicular to a central axis through a mounting interface region of the baseplate, base and collar in a detent mechanism region of the filter base and collar, and in an unlocked state.
FIG. 16 is an enlarged cross-section view of a portion of FIG. 15 but with the collar being rotated and riding on the outer surface of the base to transition to the locked state that is shown later in FIG. 19 (or from the locked state to the unlocked state).
FIG. 17 is a cross section of the filter base and assembly of FIG. 12 according to the second embodiment and along the central axis but along a different angular plan to additionally show the detent mechanism of FIGS. 13-16.
FIG. 18 is an enlarged cross section view of a portion of FIG. 18 to better show the embodiment of the detent mechanism that may be used.
FIG. 19 is cross section view like that of FIG. 15, although with the collar is displaced and rotated to a locked state in this Figure.

While the invention will be described in connection with certain preferred embodiments, there is no intent to limit it to those embodiments. On the contrary, the intent is to cover all alternatives, modifications and equivalents as included within the scope of the invention as defined by the appended claims.

### DETAILED DESCRIPTION OF THE INVENTION

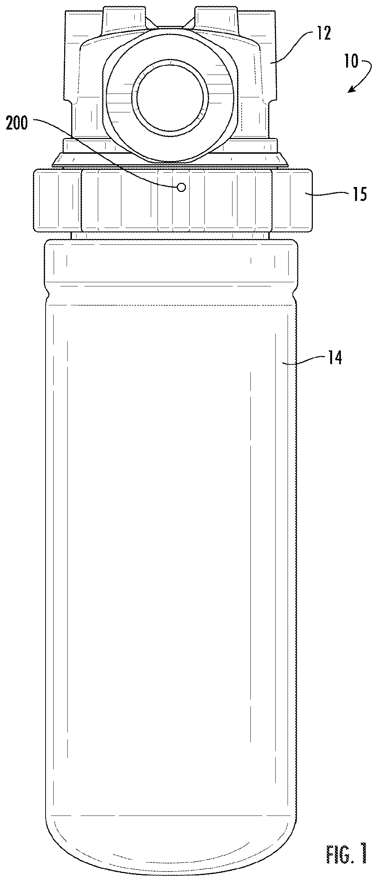

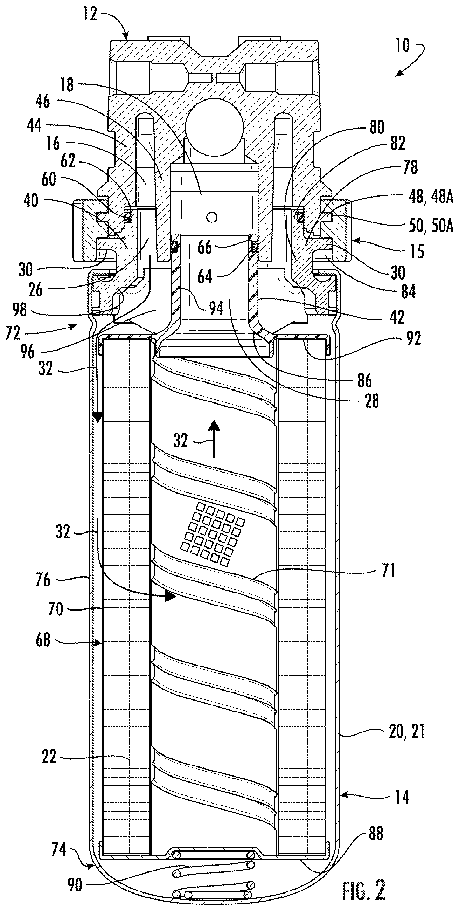

Referring to FIGS. 1 and 2, an embodiment of the present invention has been illustrated as a filter and base assembly 10 for filtering fluid (e.g. oil, hydraulic working fluid, other liquids, etc.). The assembly 10 comprises a filter base 12 and a filter 14, along with a collar 15 that can removably connect and secure the filter 14 to the base 12.

The embodiments illustrated herein are particularly applicable to high pressure applications that may experience pressures exceeding 100 PSI. As such the mounting interface parts between the collar and the filter are preferably composed of metal such as steel or aluminum, which provides high strength and low deflection.

The filter base 12 includes an unfiltered fluid outlet 16, and a filtered fluid inlet 18. For example, the filter base 12 is mountable to an engine, working hydraulic fluid circuit or other fluid filtration application. The filter base 12 can receive unfiltered fluid, and transmit unfiltered fluid to the filter 14 through the unfiltered fluid outlet 16. The filter base 12 can receive filtered fluid back from the filter 14 though the filtered fluid inlet 18, which the filter base can transmit back filtered fluid then to the given application for use (e.g. lubrication and/or hydraulic working cylinders, actuators, etc.).

The filter 14 comprises a housing 20 containing a filter media 22, and a mounting interface 24 adjacent an end of the housing. The mounting interface 24 includes an inlet port 26, an outlet port 28 and a plurality of radial projections 30. The mounting interface 24 provides both fluid communication as well as removable mechanical connection with the filter base 12.

For example, as illustrated, the mounting interface 24 is in fluid communication with the filter base with the unfiltered fluid outlet 16 communicating with the inlet port 26 for conveying unfiltered fluid to the filter 14, and the outlet port 28 communicating with filtered fluid inlet 18 for conveying filtered fluid back to the filter base 12. Schematic flow path arrows indicate a fluid passageway 32 from the inlet port through the filter media to the outlet port for filtering fluid.

The collar 15 is rotatably mounted on the filter base and serves to releasably retain the filter 14 to the filter base 12. The collar 15 includes a plurality of protrusions 34 interlocking with the filter 14 by axially engaging against the radial projections 30 to retain the filter to the filter base.

The radial projections 30 enable the filter and its mounting interface 24 to be free of conventional threading used in several other traditional filter applications as noted in the background.

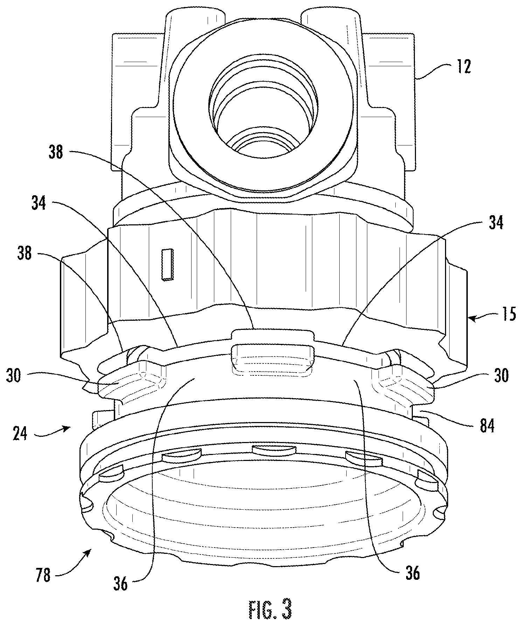

For example, as shown in FIG. 3, adjacent radial projections 30 define cut-out regions that provide gaps 36 therebetween that align and are configured in size to receive the protrusion 34 axially therethrough. Similarly, adjacent protrusions 34 define cut-out regions that define receiving slots 38 that allow the radial projections 30 to pass therethrough.

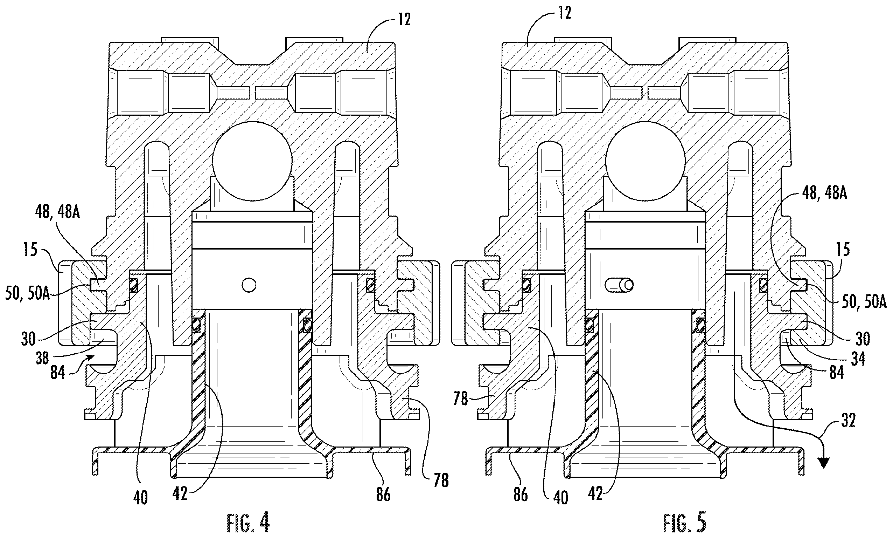

Once the protrusions 34 pass through the gaps 36 and the projections 30 pass through the slots 38 with the filter being pushed onto the base (i.e. the unlocked state), the collar 15 can be rotated which aligns the protrusions 34 over the projections 30 thereby axially retaining the filter 14 to the filter base 12 (i.e. the locked state). The unlocked state is shown in FIGS. 2, 3 as well as FIG. 4 allowing axial displacement between the filter 14 and the filter base 12, whereas in FIG. 5 the collar has been rotated to thereby axially retain the filter to the base by interlocking engagement between the protrusions and the projections.

To provide for fluid connections, the mounting interface 24 comprises an annular mouth 40 that may be provide by an outer cylindrical wall portion and an annular divider 42 that may be provided by an inner cylindrical wall portion. As show, the annular divider 42 is concentric within the annular mouth 40.

To interact and seal with the annular mouth 40 and the annular divider 42 of the mounting interface, the filter base 12 includes complimentary structures. For example, the filter base 12 further comprises an outer annular wall 44 that received the distal tip end of the annular mouth 40. Further, the filter base includes an inner annular wall 46 which receives the distal tip end of the annular divider 42.

For the filter base 12, the inner annular wall 46 defines the filtered fluid inlet 18. The outer annular wall 44 surrounds the inner annular wall 46 to define the unfiltered fluid outlet 16 radially therebetween.

To provide for a sealed connection when the filter 12 is mounted to the base, the filter 12 further comprises a first seal such as an O-ring gasket 60 supported within a first channel 62 circumscribing the annular mouth 40 toward a distal end of the annular mouth 40. The O-ring gasket 60 seats and seals against the annular mouth 40 and also against the outer annular wall 44 to seal the inlet flow path between the unfiltered fluid outlet 16 and the inlet port 26.

The filter 12 also comprises a second seal such as an O-ring gasket 64 supported within a second channel 66 circumscribing the annular divider 42 toward a distal end of the divider. The O-ring gasket 64 seats and seals against the annular divider 42 and also seals against the inner annular wall 46 to seal the outlet flow path between the outlet port 28 and the filtered fluid inlet 18.

The outer annular wall 44 also provides a support structure for the collar 15. For example, the collar 15 as shown is retained and rotatable on an outer periphery of the outer annular wall 44. The outer annular wall 44 and the collar 15 include a retainer flange 400 and a retainer groove 500, respectively or vice versa.

In this case, the retainer flange 400 is on the filter base 12 and the retainer groove 500 is formed into the inner periphery of the collar 15. In the present embodiment, the retainer flange 400 projects radially outwardly from the outer annular wall 44 and the retainer groove 500 is formed radially into an inner periphery of the collar 15.

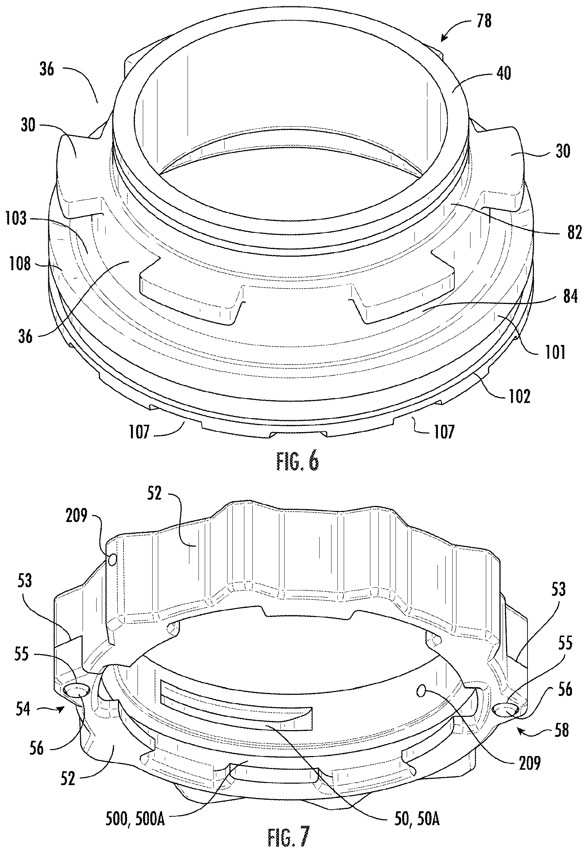

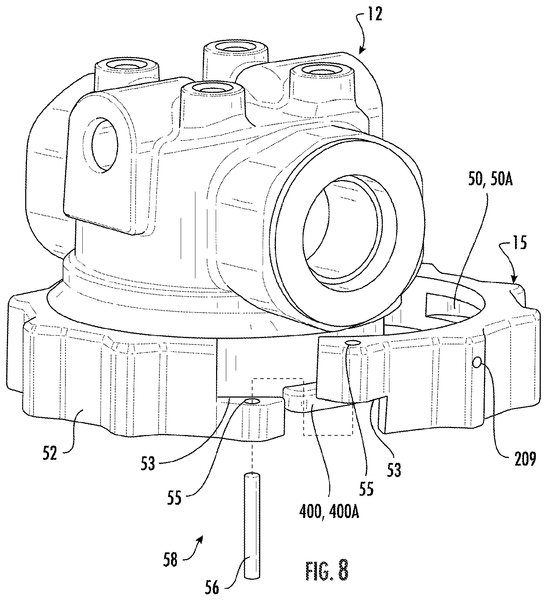

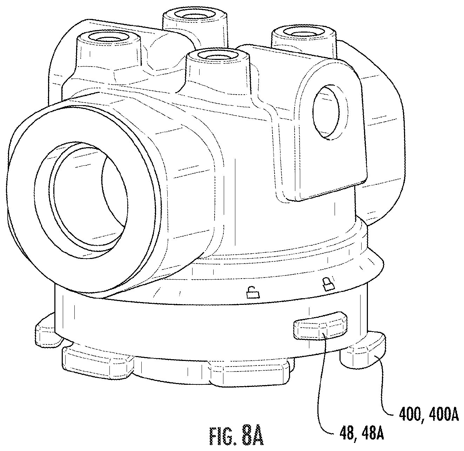

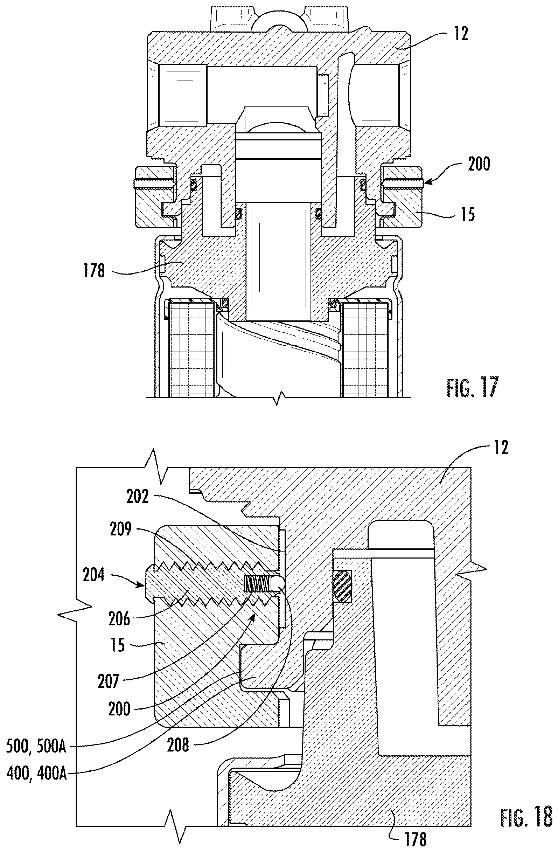

The retainer flange 400 can comprise a plurality of flange segments 400A that project axially and radially from the outer annular wall 44 of the base as shown in FIG. 8A such that the flange segments 400A can interfit and key with the radial projections of filter 14. The flange segments 400A are received within the groove 500 of the collar (see FIG. 7), which groove 500 provides a step 500A (see detail in FIG. 18) that defines a radially inward flange that axially supports loads exerted upon the collar 15 during pressurization of the filter 14.

Another retainer flange and retainer groove are provided with rotation stop groove 50 and rotation flange 48. Although these can axially retain, primarily these retain in a rotational direction.

The rotation stop groove 50 receives the rotation flange 48 to align the collar 15 to the filter base 12. The flange and groove may extend all of the way around (360 degrees) the base and the collar. Or alternatively such as shown in FIG. 7 and 8, the rotation stop flange 48 may be provided by flange segments 48A and the rotation stop groove 50 may be provided by groove segments 50A that extend only a limited angular span. Although as noted above the locations may be reversed with the rotation stop groove on the base and the rotation stop flange on the collar.

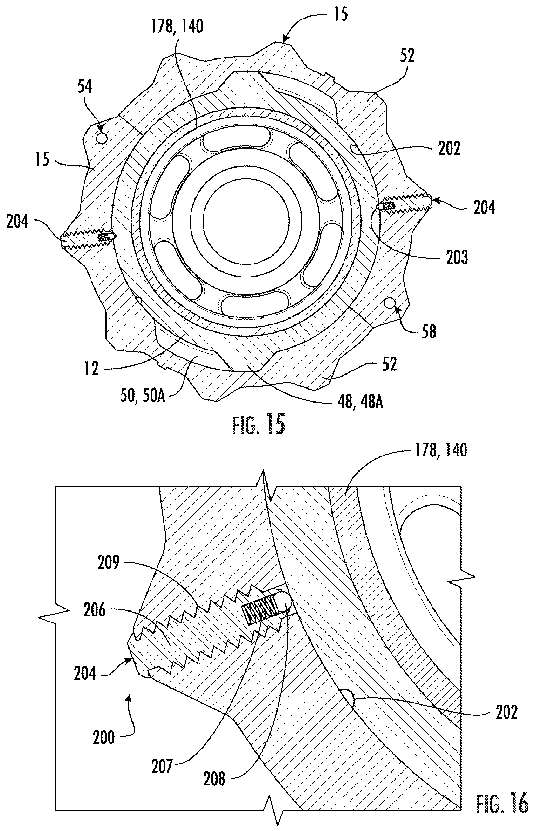

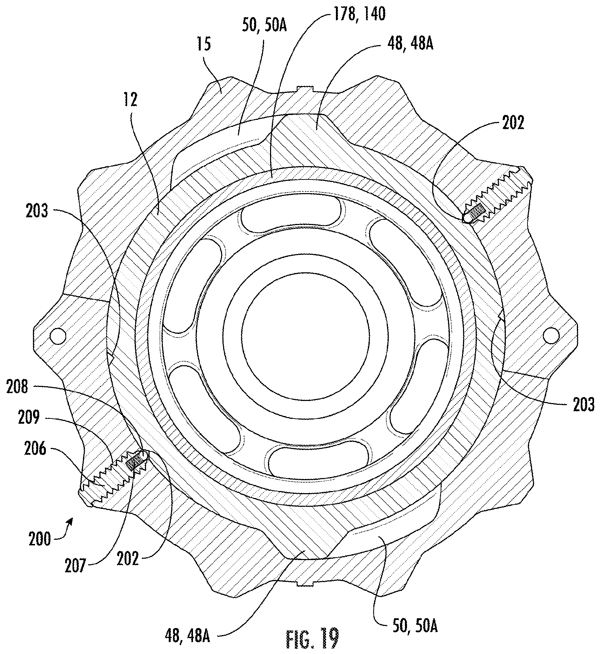

Further, as will also be seen with reference to FIGS. 15 and 19, the rotation stop groove such as provided by groove segments 50A are long enough to allow sliding movement of the rotation stop flange as provided by flange segments 48A therein. This allows rotation of the collar 15 between the locked state in which the protrusions are aligned with the radial projections to retain the filter to the filter base and the unlocked state in which the protrusions align with the gaps between adjacent radial projections to allow the filter to be moved axially relative to the filter base.

Preferably the ends of the rotation stop groove segments 50A define stops that will engage with the rotation flange segments 48A to limit rotational travel movement of the collar corresponding to locked and unlocked states to either align the protrusions 34 with the radial projections 30 for locking the filter to the filter base, or align the radial projections with the slots 38 between protrusions (e.g. see FIG. 3) in the unlocked state to allow for filter removal or installation by moving the filter 14 axially relative to the filter base 12.

To facilitate assembly and keep the collar 15 attached to the filter base 12 in a permanent manner (e.g. without tool removal), the collar 15 may be split into collar segments 52, which in this case are two collar segments although three or more collar segments may be provided in additional embodiments. As shown in FIG. 8, the collar segments 52 are assembled in place upon the filter base to accommodate interfitting of the retainer groove 500 and the retainer flange 400 as well as the groove 50 and flange 48.

The collar segments 52 are connected in place over the outer annular wall 44 of the filter base 12 with segment ends connected to each other by connectors.

For example, as shown in FIG. 8, the collar segments 52 include stepped regions 53 at first and second ends that overlap and are connected to each other.

To facilitate assembly, the stepped regions 53 may include holes 55 that overlap and align in order to provide: first pinned connection or hinge 54 at a first segment end allowing pivoting movement between segments; and a second pinned connection 58 to connect the free ends shown in FIG. 8. To attach ends of collar segments 52 together suitable fasteners such as pins 56 (e.g. such as a rivet or press fit pin or screws/bolts) may be fitted and fastened into the aligned holes 55 of the collar segments 52.

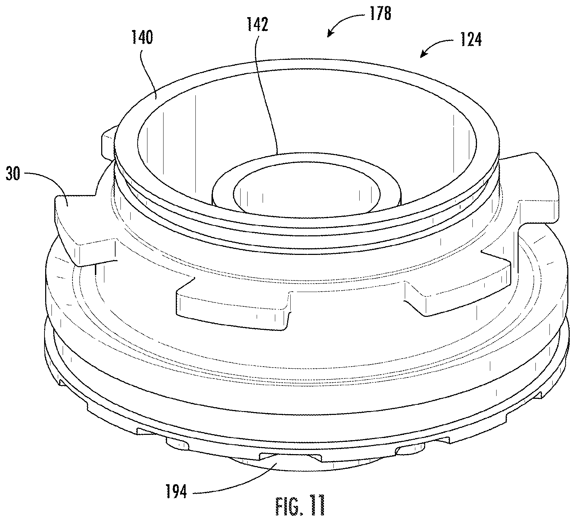

While the filter has been described in some detail above, additional attention will now be afforded to the filter 14. There are two illustrated embodiments for the filter, one in which the mounting interface is provided by a single component part shown in FIGS. 11-12; and more preferably where the mounting interface is provided by two or more component parts as shown in FIGS. 1-10. As these embodiments are otherwise the same other than configuration of baseplate and/or end cap at the open end, the same reference numbers will generally be used among these embodiments other than as applied for the differences between parts.

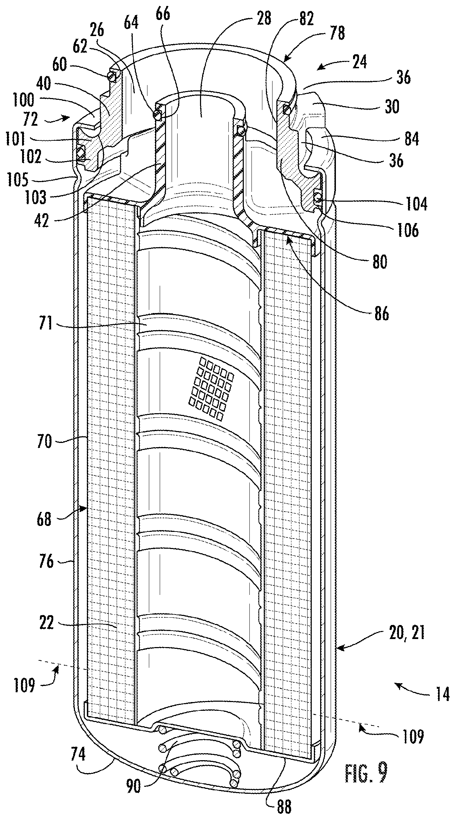

Referring to FIG. 9 (and with additional reference to other figures), the filter includes an internal filter element 68 housed within the housing 20. The filter element 68 incorporates the filter media 22 previous described that may take the form of a tubular pleated ring 70 of filter media sheet, which may be supported upon a tubular perforated support core 71.

To facilitate assembly, the filter housing 20 has an open end 72, a closed end 74 and a sidewall 76 extending between the open end 72 and the closed end 74. The sidewall 76 is disposed around the filter element 68 in spaced relation to facilitate the fluid flow passageway 32. As shown, the flow passageway 32 extends from the inlet port 26, internally through the baseplate to an annular chamber between the filter housing 20 and the pleated ring 70. In operation, fluid pressure then pushes unfiltered fluid through the pleated ring 70 so that particulates are filtered out by the filter media and the flow passageway 32 passes internally into a central filtered cavity inside the pleated ring 70 that is connected directly to the outlet port 28 to complete the flow passageway for returning filtered fluid to the filter base.

To provide for at least part of the mounting interface and at least the annular mouth 40, the filter 14 includes a baseplate 78 connected to the filter housing 20 at the open end 72. The baseplate 78 provides the annular mouth 40. In this and the other illustrated embodiment, the inlet port 26 and the outlet port 28 are radially inside of the annular mouth 40.

Further the baseplate 78 provides for the various radial projections 30 projecting radially from the mouth 40 in a region between the filter housing and a distal end of the mouth.

Preferably and especially for higher pressure applications such as hydraulic filters, the baseplate 78 including the annular mouth 40 along with the radial projections 30 are either a machined structure or a casting, and in either case being made from at least one of steel or aluminum. For example, this can provide a hydraulic filter.

For such high pressure applications such as hydraulic fluid filtration (and referring again to the overall assembly 10), preferably the collar 15 and filter base 12 both are either a machined structure or a casting, and in either case being made from at least one of steel or aluminum. The materials and forms can provide and withstand high pressure loads and keep the filter fastened and sealed to the filter base.

Accordingly, the high strength baseplate 78 along with the radial projections 30 can serve as a mounting base retainer providing a strength property such that the mounting base retainer can provide an axial retaining force when the filter is subjected to a pressure greater than 100 PSI.

While one projection may be possible, preferable the baseplate 78 provides plurality of the radial projections 30 in spaced relation with the radial gaps 36 defined between adjacent projections around the mouth 40. As shown, the radial projections project radially outwardly away from the mouth 40. While two larger radial projections are contemplated, more preferably for balancing higher pressure, at least 3 of the radial projections at least 3 of the radial gaps are provided.

As shown, the radial projections 30 and the radial gaps 36 are matched of substantially similar geometric size and configuration (and similarly the protrusions 34 are substantially similar geometric size and configuration). In this manner surface to surface contact can be maximized, and also balance and a special angular mounting orientation is not required. By matched of substantially similar geometric size and configuration, it is meant that the sizes in terms of area occupied are within 33% of each other, with the gaps maybe slightly larger to allow for install and removal clearance.

To also provide strength, it can be seen that the annular mouth 40 may be stepped to include a thicker diameter region 80 (which may constitute an intermediate cylindrical portion) from which the radial projections 30 extend and a thinner diameter region along distal tip region 82 (which may constitute a terminating cylindrical portion) above the radial projections 30, which may be utilized to support the O-ring 60 for sealing.

Additionally, along the intermediate cylindrical portion provided by the thicker diameter region, is an annular receiving groove-like region 84 arranged below the radial projections 30 and axially between the radial projections 30 and the filter housing 20. This groove-like region 84 is sized and configured for receiving mounting protrusions 34 from the filter head.

Referring to FIGS. 9-10, the filter element 68 comprises a tubular ring of the filter media provided by the pleated ring 70 along with an open end cap 86 and a closed end cap 88. The open end cap 86 is bonded to the pleated ring 70 proximate the open end 72 of the housing 20. The closed end cap 88 is bonded to the pleated ring 70 proximate the closed end 74 of the housing. To keep the filter element in sealing alignment relation proximate the open end 72 (in this case with the filter base when in use), a coil spring 90 is compressed and engages between the closed end 74 of the housing and the closed end cap 78. The spring 90 urges the filter element 68 against the baseplate 78.

While open and closed end caps are illustrated, the filter could include an opening on the bottom end cap of the element such as for certain fuel filtration applications. For example, in a coalescing fuel filter the bottom end cap next to the spring could have a seal on the outside diameter and water drop out the bottom of the inner diameter of the element in which the seal on the outside would close the bottom end cap to unfiltered fluid and also serve as a sump for water collection in the closed end of the housing (which closed end may incorporate a drain valve or drain cock for water removal).

In the present embodiment shown in FIGS. 9-10, the open end cap 86 serves as part of the mounting interface 24 by providing the annular divider 42 and the outlet port 28. To provide for this, the open end cap 86 comprises an annular disc portion 92 that bonds to the top end of the pleated ring 70 (e.g. directly through embedding or by adhesive attachment with plastisol or other such adhesive), and a tubular extension 94 projecting from the disc portion 92. The tubular extension 94 thereby provides the outlet port 28 therein and serves as the annular divider 42 to define the inlet port between the open end cap and the baseplate.

Additionally, ribs 96 are disposed between the open end cap 86 and the baseplate 78 to allow incoming unfiltered fluid to pass into the filter along the fluid flow passageway 32 and between the open end cap 86 and the baseplate 78. While the ribs 96 could be on the baseplate or a separate intermediate structure, preferably the ribs 96 as shown in this embodiment are molded directly into the open end cap 86, which may be conveniently a molded plastic structure. The ribs 96 can engage and seat within an annular stepped region 98 defined on the inner periphery of the baseplate 78. The spring 90 axially loads the filter element 68 to seat the open end cap 86 against the baseplate 78, with the ribs 96 seated against the stepped region 98. The inner perforated support core 71 may be a metal or plastic tube that in addition to supporting the media radially also can carry axial loads transmitted by the spring 90 and prevent collapse of filter media.

Turning to the embodiment FIGS. 11-12, the same reference numbers will be used for common and/or substantially similar structures and like reference numbers (same number plus one hundred) will be used for similar elements or portions as in the first illustrated embodiment, with the difference between the configuration of the baseplate 178 and the open end cap 186 as shown in the embodiment of FIGS. 11-12.

In comparing the first embodiment of FIGS. 1-10 with that of FIG. 11-12, it can be seen that the difference is that in the first embodiment, the upper end cap 86 of the filter element 68 provides the outlet port and part of the mounting interface 24, whereas in the second illustrated embodiment of FIGS. 11-12, the baseplate 178 itself provides the entire mounting interface 124 by providing both the annular mouth 140 and the annular divider 142.

In FIGS. 11-12, the baseplate 178 is a single unitary structure with a central annular hub 194 that includes a tubular extension providing the annular divider 142. The annular hub 194 is unitarily connected to the annular mouth 140 by a plurality of ribs 196 to define the inlet port 26, with the outlet port 28 defined within the tubular extension provide by the annular hub 194 and thereby providing the annular divider 142 between the inlet port and the outlet port. Similar to the first embodiment, the tubular extension of the annular hub 194 also has channel 66 carrying an O-ring seal 64 for sealing the return flow path to the filter base 12.

The open end cap 186 in this embodiment is not a molded plastic end cap as in the earlier embodiment, but can be a cup shaped cap (e.g. stamped metal end cap) that has a potting well for bonding to the top end of the pleated ring 70 such as with plastisol or other similar adhesive. This is similar to the bottom closed end cap 88 that can be the same as in the earlier embodiment as a metal cup shaped member bonded with plastisol or other similar adhesive agent. This provides the embodiment of FIGS. 11-12 with a more conventional type of internal filter element 168.

To prevent bypass of unfiltered fluid past the annular divider 142, a seal such as and O-ring gasket 189 seals between the open end cap 186 and the baseplate 178. The open end cap 186 includes a seating step 187 along its inner periphery that holds and seals against one side of the gasket 189, and similarly the baseplate defines a seating step 191 along the annular hub 194 on the axial and radial inner periphery that receives seals against one side of the gasket 189. Thus, the gasket 189 can be squeezed by application of axial force by the spring 90.

Accordingly, other than the differently configured baseplate 178 and the open end cap 186 configuration for FIGS. 11-12, the description of that for the first embodiment of FIGS. 1-10 is applicable thereto and vice versa.

Returning again to FIG. 9 and with reference to FIG. 6, the baseplate 78 is preferably configured for a permanent housing type application suitable for hydraulic filtration (or oil filtration or other liquid filtration). In the present embodiment, the housing 20 takes the form of a deep drawn sheet metal canister 21 to provide a strong structure to resist high pressures and provide the open end 72, the closed end 74 and the sidewall 76 in a single unitary component part. The canister 21 can be cylindrical and can unitarily include a terminating lip edge 100 bent over the baseplate 78 to directly connect the filter housing 20 and the baseplate 78.

To support the lip edge 100 and provide for a rigid permanent connection, the baseplate 78 further includes an annular wall that may be offset from the annular mouth 40 connected to the annular mouth by a neck region that provides an annular ledge 101 for receiving the bent terminating lip edge 100 to provide a rigid connection.

For example, the annular ledge 101 can extend radially outward from the annular mouth 40 from which then depends an outermost annular wall 102. Thus the annular ledge 101 extends radially inward from the outermost annular wall 102 to provide a region to receive a bent end portion of the canister (i.e. terminating lip edge 100) at the open end. The outermost annular wall 102 has a cylindrical outer periphery closely receiving the cylindrical inner periphery of the canister 21. A ring gasket 104 seals between the baseplate 78 and the outermost annular wall 102 and can be situated in a radially outward facing annular groove 106 made into the baseplate 78.

To provide a region to receive the bent terminating lip edge 100, an annular receiving clearance groove region 106 is formed along the exterior top side of the ledge 101 which may merge into the outer cylindrical peripheral surface of the outermost wall 102 at an acute angle to provide a pointed corner 108 that focuses axial retention force with the canister for secure permanent connection.

Further, the canister 21 can have formed therein an annular bead 105 that engages a bottom (e.g. axially innermost) terminating end of the outermost annular wall 102 to sandwich and permanently secure the baseplate 78 between the canister's terminating lip edge 100 and annular bead 105. The annular bead thereby provides a neck, which also could be provided by a reduced diameter portion of the canister.

Although not necessitated as a threaded attachment to the filter base is not used, cutout portions 107 in the baseplate may also receive portions of the annular bead 105 and can also provide torque transfer means to prevent relative rotation between the canister and the baseplate.

While a permanent connection is shown and preferred such as for high pressure applications such as hydraulic filters, optionally the housing 20 could be reusable, for example be configured similar to how is done in U.S. Publication No. 2007/0193929 to Brown which has a split housing with a housing base and a closed end in the form of a screw-on lid, which can optionally be provided as schematically indicated by lines 109 in FIG. 9. In such a resusable housing embodiment, the housing may be plastic or other materials besides metal, particularly if for lower pressure application. The baseplate likewise can then be reusable. However even in such a reusable housing embodiment the housing is considered part of the filter and the baseplate has a thread-free mounting interface connection to the filter head.

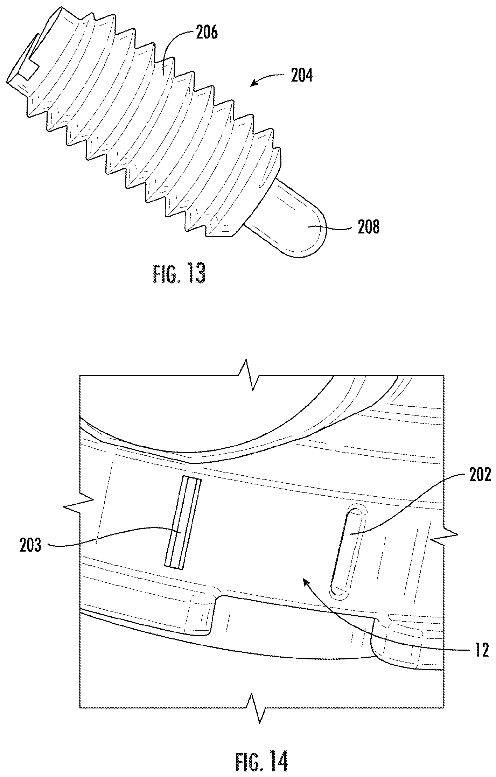

While it is believed especially in higher pressure applications that further locking means may not be needed, optionally additional collar locking can be provided by a detent mechanism 200 a part of which is shown in FIG. 1, but can be much better in FIGS. 13-19. Referring therefore to FIGS. 13-19, the detent mechanism 200 acts between the collar 15 and the filter base 12 in at least the locked state in which the collar's protrusions are axially aligned with the filter's radial projections to axially retain the filter to the filter base. This locked state is shown in FIG. 19.

The detent mechanism 200 can be manually deactivated to rotate the collar to an unlocked state in which the collar's protrusions align with gaps between adjacent radial projections of the filter (see also FIG. 3) to allow the filter to be moved axially relative to the filter base. In FIG. 16 it can be seen that the transition is occur from the locked toward the unlocked state that is shown in FIG. 15. In this condition, the detent mechanism is not engage but riding on a cylindrical surface defined between detents.

The detent mechanism 200 includes a first detent 202 (e.g. a catch such as a notched groove) corresponding to and holding the collar in the locked state and may also optionally include a second detent 203 (e.g. another catch such as a notched groove) corresponding to and holding the collar in the unlocked state. The first and second detents 202, 203 are spaced circumferentially apart by an angular span corresponding to the rotation needed to align the filter's radial projections with either the collar's protrusions or gaps therebetween to allow for retention or install/removal as may be desired.

To engage with one or both detents 202, 203 the detent mechanism also comprises an interacting catch, for example such as may be provided by a spring plunger 204. Manual force alone is sufficient to deflect spring plunger to allow rotation, but the spring plunger provides enough force to prevent dislodging of the collar during filtering operation.

For example, spring plunger 204 may include a threaded plunger housing 206 having a spring cavity supporting a spring 207 therein that urges a catch tab such as pin projection 208 outwardly away from the housing so as to engage with detents 202, 203. The threaded plunger housing 206 is threaded into a threaded hole 209, such as on the collar 15.

In this present embodiment, therefore, the spring plunger 204 is mounted on the collar 15 and the detents 202, 203 formed into the filter base 12, however it is realized the locations of these respective structures could be reversed with the detents on the collar and the spring plunger on the base.

### Additional Observations & Comments

As described above, embodiments may utilize a permanent collar rotatably fixed to a free-standing filter base that may be provided by a casting. The collar has a series of cutouts between wedge-shaped, radially inward extending protrusions on the inner diameter of the collar that accepts projection(s) extending radially outward from a baseplate of filter cartridge. When the collar is twisted, protrusions from the collar moves under the projections on the baseplate to trap the projections between the protrusions and an inner annular ledge within the collar, so as to lock the cartridge to the base or casting. To remove the filter, the collar is twisted in the opposite direction to release the projection(s), and the filter can be pulled out of the collar and apart from the base/casting. This eliminates the need for threads on a filter, normally used in, e.g., medium pressure lube and hydraulic applications.

As shown, an end cap may be fixed at one end of the media ring. The end cap engages with a baseplate having a central circular opening. An annular mouth projects outwardly from the baseplate, coaxial with the central axis. The mouth can include i) a first seal supported within a first channel circumscribing the mouth toward a distal end of the mouth, and ii) one or more radial projections spaced around the circumference of the mouth between the baseplate and seal, and projecting outwardly, away from the mouth.

The projections mate with a similar shaped cutout on the inner diameter of the collar, formed by radial protrusions, (e.g. see FIGS 6 and 7). Preferably, the collar is permanently rotatably mounted to the filter base. Fig. 3 shows the baseplate aligned and ready to be inserted into the collar. Once a filter has been inserted into the collar, such as shown in Fig. 4, the collar is twisted and the protrusions in the collar support the projections in the baseplate, as shown in Fig. 5. The baseplate can have multiple projections extending radially from it but could contain a minimum of one.

The baseplate contains a radial seal supported within a channel and extending outward toward the distal end of the baseplate. The seal could likewise extend inward to seal the baseplate to the filter head. In the preferred design, the projections extend outward from the base, and the cutouts on the baseplate are on the inner diameter; but the projections could likewise extend radially inward from the baseplate, and the cutouts could be provided on the collar extending from the outer diameter.

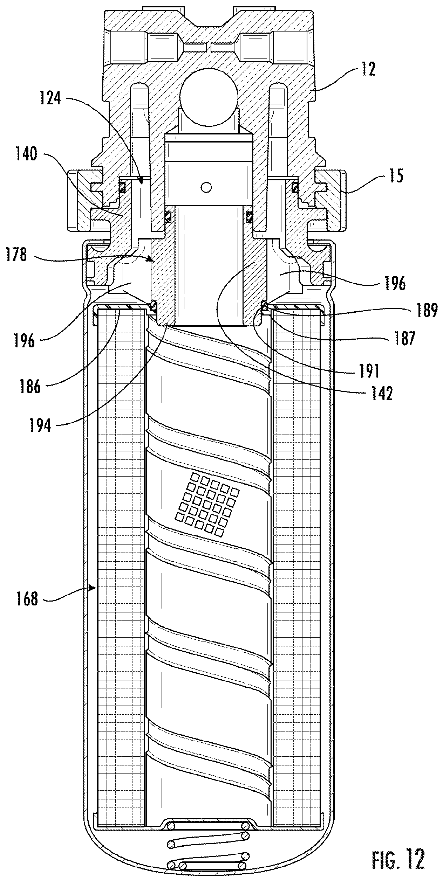

In FIGS. 4 and 5 and also in the embodiment of FIG. 12, the filter mounting interface also includes an inner annular divider section that divides flow between the clean and dirty side of the filter. In one embodiment the annular divider is provided by an end cap and in the other the divider is provided by the baseplate itself. This inner divider section contains a second seal that extends radially outward. As with the outer seal, the inner seal could extend radially inward depending on the configuration or application. In either configuration whether facing inwardly or outwardly, the inner and/or outer seals are considered to be circumscribing.

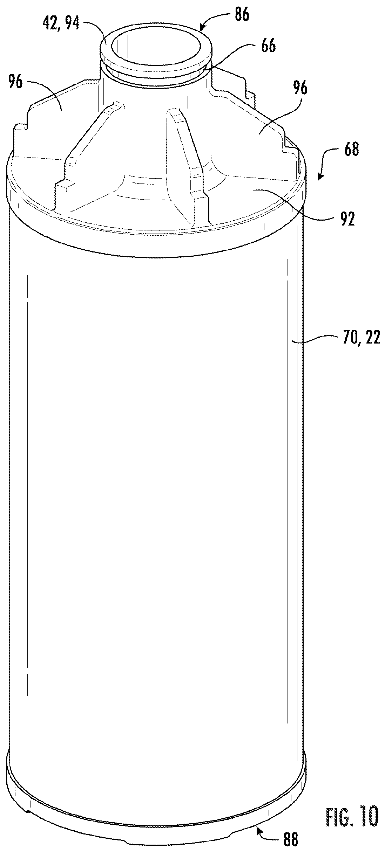

In FIG. 11, the baseplate contains an inner and outer divider section connected by a series of ribs. These ribs and inner divider section could instead be part of the top element end cap and separate from the baseplate as seen in FIG. 10. If the ribs and inner section are part of the end cap, the baseplate may be considerably less expensive. An example of a simplified baseplate can be seen FIG. 6.

The preferred embodiments shown contain a disposable filter and canister arrangement with a can bent over a shoulder of the baseplate to form a spin-on filter. If the baseplate is steel, a seaming cover could be welded to it and the can seamed to the seaming cover (e.g. a seaming lid technique is shown in in U.S. Patent No. 5,490,930 to Krull entitled "Filter") thereby connecting the baseplate to the filter housing. In either case a baseplate connected to the filter housing at the open end.

The canister could be reusable and made of metal or plastic with a replaceable inner element, and FIG. 9 is schematically show with a optional cap break 109 whereby the closed end may be removable and connectable threaded lid to the remainder of the housing such as via a threaded connection (see e.g. U.S. Publication No. 2007/0193929 to Brown illustrating a threaded lid).

Preferably as shown, the housing and the baseplate are separate component parts and not unitarily connected with the baseplate connected to the housing at and proximate the open end of the housing. The housing and the baseplate may also be integrally and/or unitarily connected in an integral housing assembly rather than as separate component parts.

For example, the canister could also be cast out of one piece and the filter dropped in from the top. In this instance a housing assembly would be a high strength plastic or metal (steel, aluminum or magnesium). This design would have the protrusions 30 cast to the outside diameter of the housing assembly and the wall 40 would extend down the length creating the side wall 76. In this design, the baseplate is also integrally and unitarily connected to the housing at the housing open end which in that case would be where the sidewall portion merges into the baseplate portion.

As shown in FIGS. 7 and 8, the collar is a two-piece collar, but it could be two or more pieces. The cover could be plastic or metal depending on the strength requirements.

The filter base can be a stand-alone base for a frame or engine mount application. It could be molded into a larger casting as well.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A filter (14), comprising:
an inlet port (26);
an outlet port (28);
a filter element (68) including a filter media (22),
a filter housing (20) having an open end (72), a closed end (74) and a sidewall (76) extending between the open end (72) and the closed end (74), the sidewall (76) disposed around the filter element (68);
a flow passageway (32) extending from the inlet port (26) through the filter media (22) to the outlet port (28); and
a baseplate (78; 178) connected to the filter housing at the open end (72), the baseplate (78) including an annular mouth (40; 140) with the inlet port (26) and the outlet port (28) radially inside of the annular mouth (40), and at least one radial projection (30) projecting radially from the mouth (40; 140) between the filter housing (20) and a distal end of the mouth, wherein the at least one radial projection comprises a plurality of radial projections (30) in spaced relation with radial gaps (36) defined between adjacent projections around the mouth (40; 140), and wherein the plurality of radial projections (30) project radially outwardly away from the mouth (40; 140).

2. The filter of claim 1, further comprising a ring seal (64) supported within a first annular channel (66) defined by the mouth (40) toward a distal end of the mouth.

3. The filter of claim 1, wherein the baseplate (78; 178) and the filter housing (20) are separate component parts, the baseplate (78; 178) including the annular mouth (40; 140) and the at least one radial projection (30) are at least one of a machined structure and a casting from at least one of steel or aluminum, and wherein the filter (14) is a liquid filter.

4. The filter of claim 3, wherein the at least one radial projection (30) serves as a mounting base retainer providing a strength property such that the mounting base retainer can provide an axial retaining force when the filter (14) is subjected to a pressure greater than 100 PSI.

5. The filter of claim 1, wherein at least three of the radial projections (30) and at least three of the radial gaps (36) are provided, and with the radial projections and the radial gaps being matched of substantially similar geometric size and configuration.

6. The filter of claim 1, wherein the annular mouth (40; 140) is stepped to include a thicker diameter region (80) from which the radial projections (30) extend and a thinner diameter region along distal tip region (82) above the radial projections (30).

7. The filter of claim 1, wherein an annular receiving groove region (84) is arranged below the at least one radial projection (30) and axially between the at least one radial projection (30) and the filter housing (20) that is sized and configured for receiving mounting protrusions (34) from a filter head.

8. The filter of claim 1, wherein the baseplate (78; 178) further comprising a step in outer diameter from a terminating cylindrical portion (82) extending axially away from the at least one radial projection (30) to a terminating end, and an intermediate cylindrical portion (80) supporting the at least one radial projection (30).

9. The filter of claim 1, wherein the filter element (68) comprises a tubular ring of the filter media (70), an open end cap (86) and a closed end cap (88), the open end cap (86) bonded to the tubular ring of the filter media (70) proximate the open end (72) and the closed end cap (88) bonded to the tubular ring of the filter media (70) proximate the closed end (74), further comprising a spring (90) engaging between the closed end (74) and the closed end cap (88) urging the filter element (68) against the baseplate (178), and
wherein the baseplate (178) further comprises an annular hub (194) including a tubular extension, the annular hub (194) connected to the annular mouth (140) by a plurality of ribs (196) to define the inlet port (26), the outlet port (28) defined within the tubular extension providing an annular divider (142) between the inlet por (26) and the outlet port (28), the tubular extension having groove (66) carrying a ring seal (64).

10. The filter of claim 1, wherein the filter element (68) comprises a tubular ring of the filter media (70), an open end cap (86) and a closed end cap (88), the open end cap (86) bonded to the tubular ring of the filter media (70) proximate the open end (72) and the closed end cap (88) bonded to the tubular ring of the filter media (70) proximate the closed end (88), further comprising a spring (90) engaging between the closed end (74) and the closed end cap (88) urging the filter element (68) against the baseplate (78), and
wherein the open end cap (86) comprises an annular disc portion (92) and a tubular extension (94) projecting therefrom to provide the outlet port (28) therein and serve an annular divider (42) to define the inlet port (26) between the open end cap (86) and the baseplate (78).

11. The filter of claim 1, wherein the filter housing (20) comprises a cylindrical metal canister (21) having a terminating lip edge (100) bent over the baseplate (78) directly connected the filter housing (20) and the baseplate (78);
the baseplate (78) further including an outermost annular wall (102) and an annular ledge (101), the outermost annular wall (102) depending and axially extending from the ledge (101), with the ledge extending radially inward from the outermost annular wall to the annular mouth (40), the terminating lip edge (100) engaging over the annular ledge (101); and
a ring gasket (104) sealing between the baseplate (78) and the outermost annular wall (102).

12. The filter of claim 11 further comprising an annular bead or neck (105) formed into the cylindrical metal canister (21) engaging a terminating end of the outermost annular wall (102) to sandwich and permanently secure the baseplate (78) between the terminating lip edge (100) and annular bead or neck (105).

13. The filter of claim 1, wherein the filter housing (20) is permanently mounted to the baseplate (78; 178), and wherein the filter element (68) is one of removable and permanently installed in the filter housing (20).

14. The filter of claim 1, wherein the filter element (68) further comprises an open end cap (86) and a closed end cap (88), the open end cap (86) bonded to the filter media (22) proximate the open end (72) and the closed end cap (74) bonded to the filter media (22) proximate the closed end (74), the baseplate (78; 178) being non-unitary as a separate structure from the open end cap (86).

15. A filter and base assembly (10) including the filter (14) of claim 1 and further comprising: a filter base (12) including a unfiltered fluid outlet (16), and a filtered fluid inlet (18); the filter (14) removably connected to the filter base (12); and a collar (15) retaining the filter (14) to the filter base (12), the collar (15) including a plurality of protrusions (34) interlocking with the filter (14) and axially engaging against the plurality of radial projections (30) to retain the filter to the filter base.

## Patentansprüche

1. Ein Filter (14), der Folgendes beinhaltet:
eine Einlassöffnung (26);
eine Auslassöffnung (28);
ein Filterelement (68), das ein Filtermedium (22) umfasst,
ein Filtergehäuse (20), das ein offenes Ende (72), ein geschlossenes Ende (74) und
eine Seitenwand (76), die sich zwischen dem offenen Ende (72) und dem geschlossenen Ende (74) erstreckt, aufweist, wobei die Seitenwand (76) um das Filterelement (68) herum angeordnet ist;
einen Strömungsdurchgang (32), der sich von der Einlassöffnung (26) durch das Filtermedium (22) zu der Auslassöffnung (28) erstreckt; und
eine Basisplatte (78; 178), die mit dem Filtergehäuse an dem offenen Ende (72) verbunden ist, wobei die Basisplatte (78) eine ringförmige Mündung (40; 140) mit der Einlassöffnung (26) und der Auslassöffnung (28) radial innerhalb der ringförmigen Mündung (40) und mindestens einen radialen Vorsprung (30), der zwischen dem Filtergehäuse (20) und einem distalen Ende der Mündung radial von der Mündung (40; 140) vorsteht, umfasst, wobei der mindestens eine radiale Vorsprung eine Vielzahl von radialen Vorsprüngen (30) in beabstandeter Beziehung mit radialen Lücken (36), die zwischen benachbarten Vorsprüngen um die Mündung (40; 140) herum definiert sind, beinhaltet und wobei die Vielzahl von radialen Vorsprüngen (30) radial nach außen weg von der Mündung (40; 140) vorstehen.

2. Filter gemäß Anspruch 1, der ferner eine Ringdichtung (64) beinhaltet, die innerhalb eines ersten ringförmigen Kanals (66) gestützt wird, der durch die Mündung (40) in Richtung eines distalen Endes der Mündung definiert ist.

3. Filter gemäß Anspruch 1, wobei die Basisplatte (78; 178) und das Filtergehäuse (20) separate Bauteile sind, die Basisplatte (78; 178), umfassend die ringförmige Mündung (40; 140), und der mindestens eine radiale Vorsprung (30) mindestens eines aus einer maschinell bearbeiteten Struktur und einem Gussteil aus mindestens einem aus Stahl oder Aluminium sind und wobei der Filter (14) ein Flüssigkeitsfilter ist.

4. Filter gemäß Anspruch 3, wobei der mindestens eine radiale Vorsprung (30) als eine Montagebasishalterung dient, die eine solche Festigkeitseigenschaft bereitstellt, dass die Montagebasishalterung eine axiale Haltekraft bereitstellen kann, wenn der Filter (14) einem Druck von mehr als 100 PSI ausgesetzt ist.

5. Filter gemäß Anspruch 1, wobei mindestens drei der radialen Vorsprünge (30) und mindestens drei der radialen Lücken (36) bereitgestellt sind und wobei die radialen Vorsprünge und die radialen Lücken von im Wesentlichen ähnlicher geometrischer Größe und Konfiguration aufeinander abgestimmt sind.

6. Filter gemäß Anspruch 1, wobei die ringförmige Mündung (40; 140) abgestuft ist, um eine Region (80) mit dickerem Durchmesser, von der aus sich die radialen Vorsprünge (30) erstrecken, und eine Region mit dünnerem Durchmesser entlang einer distalen Spitzenregion (82) oberhalb der radialen Vorsprünge (30) zu umfassen.

7. Filter gemäß Anspruch 1, wobei unterhalb des mindestens einen radialen Vorsprungs (30) und axial zwischen dem mindestens einen radialen Vorsprung (30) und dem Filtergehäuse (20) eine ringförmige Aufnahmenutregion (84) eingerichtet ist, die zum Aufnehmen von Montagevorsprüngen (34) von einem Filterkopf bemessen und konfiguriert ist.

8. Filter gemäß Anspruch 1, wobei die Basisplatte (78; 178) ferner eine Stufe im Außendurchmesser von einem zylindrischen Abschlussabschnitt (82), der sich axial von dem mindestens einen radialen Vorsprung (30) weg zu einem Abschlussende erstreckt, und einen zylindrischen Zwischenabschnitt (80), der den mindestens einen radialen Vorsprung (30) stützt, beinhaltet.

9. Filter gemäß Anspruch 1, wobei das Filterelement (68) einen rohrförmigen Ring des Filtermediums (70), eine offene Endkappe (86) und eine geschlossene Endkappe (88) beinhaltet, wobei die offene Endkappe (86) mit dem rohrförmigen Ring des Filtermediums (70) in der Nähe des offenen Endes (72) zusammengefügt ist und die geschlossene Endkappe (88) mit dem rohrförmigen Ring des Filtermediums (70) in der Nähe des geschlossenen Endes (74) zusammengefügt ist, ferner beinhaltend eine Feder (90), die zwischen dem geschlossenen Ende (74) und der geschlossenen Endkappe (88) eingreift und das Filterelement (68) gegen die Basisplatte (178) drückt, und
wobei die Basisplatte (178) ferner eine ringförmige Nabe (194) beinhaltet, die eine rohrförmige Verlängerung umfasst, wobei die ringförmige Nabe (194) mit der ringförmigen Mündung (140) durch eine Vielzahl von Rippen (196) verbunden ist, um die Einlassöffnung (26) zu definieren, wobei die Auslassöffnung (28), die innerhalb der rohrförmigen Verlängerung definiert ist, einen ringförmigen Teiler (142) zwischen der Einlassöffnung (26) und der Auslassöffnung (28) bereitstellt, wobei die rohrförmige Verlängerung eine Nut (66) aufweist, die eine Ringdichtung (64) trägt.

10. Filter gemäß Anspruch 1, wobei das Filterelement (68) einen rohrförmigen Ring des Filtermediums (70), eine offene Endkappe (86) und eine geschlossene Endkappe (88) beinhaltet, wobei die offene Endkappe (86) mit dem rohrförmigen Ring des Filtermediums (70) in der Nähe des offenen Endes (72) zusammengefügt ist und die geschlossene Endkappe (88) mit dem rohrförmigen Ring des Filtermediums (70) in der Nähe des geschlossenen Endes (88) zusammengefügt ist, ferner beinhaltend eine Feder (90), die zwischen dem geschlossenen Ende (74) und der geschlossenen Endkappe (88) eingreift und das Filterelement (68) gegen die Basisplatte (78) drückt, und
wobei die offene Endkappe (86) einen ringförmigen Scheibenabschnitt (92) und eine davon vorstehende rohrförmige Verlängerung (94) beinhaltet, um die Auslassöffnung (28) darin bereitzustellen und als ein ringförmiger Teiler (42) zu dienen, um die Einlassöffnung (26) zwischen der offenen Endkappe (86) und der Basisplatte (78) zu definieren.

11. Filter gemäß Anspruch 1, wobei das Filtergehäuse (20) einen zylindrischen Metallbehälter (21) beinhaltet, der eine Abschlusslippenkante (100) aufweist, die über die Basisplatte (78) gebogen ist, um das Filtergehäuse (20) und die Basisplatte (78) direkt zu verbinden;
die Basisplatte (78) ferner eine äußerste ringförmige Wand (102) und eine ringförmige Leiste (101) umfasst, wobei die äußerste ringförmige Wand (102) von der Leiste (101) abgeht und sich von dieser axial erstreckt, wobei sich die Leiste von der äußersten ringförmigen Wand radial nach innen zu der ringförmigen Mündung (40) erstreckt, wobei die Abschlusslippenkante (100) über die ringförmige Leiste (101) eingreift; und eine Ringdichtung (104) zwischen der Basisplatte (78) und der äußersten ringförmigen Wand (102) abdichtet.

12. Filter gemäß Anspruch 11, der ferner einen ringförmigen Wulst oder Hals (105) beinhaltet, der in den zylindrischen Metallbehälter (21) eingeformt ist und in ein Abschlussende der äußersten ringförmigen Wand (102) eingreift, um die Basisplatte (78) zwischen der Abschlusslippenkante (100) und dem ringförmigen Wulst oder Hals (105) einzuschließen und dauerhaft zu sichern.

13. Filter gemäß Anspruch 1, wobei das Filtergehäuse (20) dauerhaft an der Basisplatte (78; 178) montiert ist und wobei das Filterelement (68) eines von herausnehmbar und dauerhaft in dem Filtergehäuse (20) installiert ist.

14. Filter gemäß Anspruch 1, wobei das Filterelement (68) ferner eine offene Endkappe (86) und eine geschlossene Endkappe (88) beinhaltet, wobei die offene Endkappe (86) mit dem Filtermedium (22) in der Nähe des offenen Endes (72) zusammengefügt ist und die geschlossene Endkappe (74) mit dem Filtermedium (22) in der Nähe des geschlossenen Endes (74) zusammengefügt ist, wobei die Basisplatte (78; 178) als eine von der offenen Endkappe (86) getrennte Struktur nicht einstückig ausgebildet ist.

15. Eine Filter- und Basisanordnung (10), die den Filter (14) gemäß Anspruch 1 umfasst und ferner Folgendes beinhaltet: eine Filterbasis (12), umfassend einen Auslass (16) für ungefiltertes Fluid und einen Einlass (18) für gefiltertes Fluid; den Filter (14), der herausnehmbar mit der Filterbasis (12) verbunden ist; und einen Kragen (15), der den Filter (14) an der Filterbasis (12) hält, wobei der Kragen (15) eine Vielzahl von Vorsprüngen (34) umfasst, die mit dem Filter (14) ineinandergreifen und axial gegen die Vielzahl von radialen Vorsprüngen (30) eingreifen, um den Filter an der Filterbasis zu halten.

## Revendications

1. Un filtre (14), comprenant :
un orifice d'entrée (26) ;
un orifice de sortie (28) ;
un élément filtrant (68) incluant un milieu filtrant (22),
un boîtier de filtre (20) présentant une extrémité ouverte (72), une extrémité fermée (74) et une paroi latérale (76) s'étendant entre l'extrémité ouverte (72) et l'extrémité fermée (74), la paroi latérale (76) étant disposée autour de l'élément filtrant (68) ;
un passage d'écoulement (32) s'étendant à partir de l'orifice d'entrée (26) à travers le milieu filtrant (22) jusqu'à l'orifice de sortie (28) ; et
une plaque de base (78 ; 178) raccordée au boîtier de filtre au niveau de l'extrémité ouverte (72), la plaque de base (78) incluant une embouchure annulaire (40 ; 140), l'orifice d'entrée (26) et l'orifice de sortie (28) étant radialement à l'intérieur de l'embouchure annulaire (40), et au moins une saillie radiale (30) faisant saillie radialement à partir de l'embouchure (40 ; 140) entre le boîtier de filtre (20) et une extrémité distale de l'embouchure, dans lequel l'au moins une saillie radiale comprend une pluralité de saillies radiales (30) dans une relation d'espacement, des espaces radiaux (36) étant définis entre des saillies adjacentes autour de l'embouchure (40 ; 140), et dans lequel la pluralité de saillies radiales (30) font saillie radialement vers l'extérieur à l'opposé de l'embouchure (40 ; 140).

2. Le filtre de la revendication 1, comprenant en outre un joint d'étanchéité annulaire (64) supporté au sein d'un premier canal annulaire (66) défini par l'embouchure (40) en direction d'une extrémité distale de l'embouchure.

3. Le filtre de la revendication 1, dans lequel la plaque de base (78 ; 178) et le boîtier de filtre (20) sont des parties constitutives séparées, la plaque de base (78 ; 178) incluant l'embouchure annulaire (40 ; 140) et l'au moins une saillie radiale (30) est une structure usinée et/ou une pièce coulée en acier et/ou en aluminium, et dans lequel le filtre (14) est un filtre à liquide.

4. Le filtre de la revendication 3, dans lequel l'au moins une saillie radiale (30) sert d'élément de retenue de base de montage produisant une propriété de résistance telle que l'élément de retenue de base de montage peut produire une force de retenue axiale lorsque le filtre (14) est soumis à une pression supérieure à 100 PSI.

5. Le filtre de la revendication 1, dans lequel au moins trois des saillies radiales (30) et au moins trois des espaces radiaux (36) sont prévus, et les saillies radiales et les espaces radiaux étant appariés en termes de dimension et de configuration géométriques substantiellement similaires.

6. Le filtre de la revendication 1, dans lequel l'embouchure annulaire (40 ; 140) est étagée de manière à inclure une région de diamètre plus épais (80) à partir de laquelle les saillies radiales (30) s'étendent et une région de diamètre plus mince le long d'une région de bout distale (82) au-dessus des saillies radiales (30).

7. Le filtre de la revendication 1, dans lequel une région de rainure de réception annulaire (84) est placée au-dessous de l'au moins une saillie radiale (30) et axialement entre l'au moins une saillie radiale (30) et le boîtier de filtre (20) qui est dimensionné et configuré pour recevoir des protubérances de montage (34) d'une tête de filtre.

8. Le filtre de la revendication 1, dans lequel la plaque de base (78 ; 178) comprend en outre un étage dans le diamètre extérieur à partir d'une portion cylindrique de terminaison (82) s'étendant axialement à l'opposé de l'au moins une saillie radiale (30) jusqu'à une extrémité de terminaison, et une portion cylindrique intermédiaire (80) supportant l'au moins une saillie radiale (30).

9. Le filtre de la revendication 1, dans lequel l'élément filtrant (68) comprend un anneau tubulaire du milieu filtrant (70), un couvercle d'extrémité ouverte (86) et un couvercle d'extrémité fermée (88), le couvercle d'extrémité ouverte (86) étant lié à l'anneau tubulaire du milieu filtrant (70) près de l'extrémité ouverte (72) et le couvercle d'extrémité fermée (88) étant lié à l'anneau tubulaire du milieu filtrant (70) près de l'extrémité fermée (74), comprenant en outre un ressort (90) venant en prise entre l'extrémité fermée (74) et le couvercle d'extrémité fermée (88) poussant l'élément filtrant (68) contre la plaque de base (178), et
dans lequel la plaque de base (178) comprend en outre un moyeu annulaire (194) incluant un prolongement tubulaire, le moyeu annulaire (194) étant raccordé à l'embouchure annulaire (140) par une pluralité de nervures (196) pour définir l'orifice d'entrée (26), l'orifice de sortie (28) défini au sein du prolongement tubulaire produisant un diviseur annulaire (142) entre l'orifice d'entrée (26) et l'orifice de sortie (28), le prolongement tubulaire présentant une rainure (66) portant un joint d'étanchéité annulaire (64).

10. Le filtre de la revendication 1, dans lequel l'élément filtrant (68) comprend un anneau tubulaire du milieu filtrant (70), un couvercle d'extrémité ouverte (86) et un couvercle d'extrémité fermée (88), le couvercle d'extrémité ouverte (86) étant lié à l'anneau tubulaire de milieu filtrant (70) près de l'extrémité ouverte (72) et le couvercle d'extrémité fermée (88) étant lié à l'anneau tubulaire de milieu filtrant (70) près de l'extrémité fermée (88), comprenant en outre un ressort (90) venant en prise entre l'extrémité fermée (74) et le couvercle d'extrémité fermée (88) poussant l'élément filtrant (68) contre la plaque de base (78), et
dans lequel le couvercle d'extrémité ouverte (86) comprend une portion de disque annulaire (92) et un prolongement tubulaire (94) faisant saillie à partir de celle-ci pour y fournir l'orifice de sortie (28) et servir de diviseur annulaire (42) afin de définir l'orifice d'entrée (26) entre le couvercle d'extrémité ouverte (86) et la plaque de base (78).

11. Le filtre de la revendication 1, dans lequel le boîtier de filtre (20) comprend un contenant métallique cylindrique (21) présentant un bord en lèvre de terminaison (100) replié par-dessus la plaque de base (78) directement raccordé au boîtier de filtre (20) et à la plaque de base (78) ;
la plaque de base (78) incluant en outre une paroi annulaire la plus à l'extérieur (102) et un rebord annulaire (101), la paroi annulaire la plus à l'extérieur (102) pendant et s'étendant axialement à partir du rebord (101), avec le rebord s'étendant radialement vers l'intérieur à partir de la paroi annulaire la plus à l'extérieur jusqu'à l'embouchure annulaire (40), le bord en lèvre de terminaison (100) venant en prise par-dessus le rebord annulaire (101) ; et
une garniture d'étanchéité annulaire (104) réalisant l'étanchéité entre la plaque de base (78) et la paroi annulaire la plus à l'extérieur (102).

12. Le filtre de la revendication 11 comprenant en outre un bourrelet ou col annulaire (105) formé dans le contenant métallique cylindrique (21) venant en prise avec l'extrémité de terminaison de la paroi annulaire la plus à l'extérieur (102) pour prendre en sandwich et assujettir de façon permanente la plaque de base (78) entre le bord en lèvre de terminaison (100) et le bourrelet ou col annulaire (105).

13. Le filtre de la revendication 1, dans lequel le boîtier de filtre (20) est monté de façon permanente sur la plaque de base (78 ; 178), et dans lequel l'élément filtrant (68) est soit amovible, soit installé de façon permanente dans le boîtier de filtre (20).

14. Le filtre de la revendication 1, dans lequel l'élément filtrant (68) comprend en outre un couvercle d'extrémité ouverte (86) et un couvercle d'extrémité fermée (88), le couvercle d'extrémité ouverte (86) étant relié au milieu filtrant (22) près de l'extrémité ouverte (72) et le couvercle d'extrémité fermée (74) étant relié au milieu filtrant (22) près de l'extrémité fermée (74), la plaque de base (78 ; 178) étant non unitaire en tant que structure séparée du couvercle d'extrémité ouverte (86).

15. Un ensemble à filtre et base (10) incluant le filtre (14) de la revendication 1 et comprenant en outre : une base de filtre (12) incluant une sortie de fluide non filtré (16), et une entrée de fluide filtré (18) ; le filtre (14) étant raccordé de manière amovible à la base de filtre (12) ; et un collier (15) retenant le filtre (14) sur la base de filtre (12), le collier (15) incluant une pluralité de protubérances (34) en verrouillage mutuel avec le filtre (14) et venant en prise axialement contre la pluralité de saillies radiales (30) pour retenir le filtre sur la base de filtre.
